# EUROPEAN PATENT APPLICATION

(11) **EP 2 222 101 A1**
(43) Date of publication of application: **25.08.2010**
(21) Application number: 08860298.2
(22) Date of filing: 10.12.2008
(51) Int. Cl.: H04W 4/06, H04J 3/00, H04W 72/12

(54) **MOBILE COMMUNICATION SYSTEM, ENHANCED NODE B, USER EQUIPMENT, AND METHOD**

(30) Priority: 12.12.2007 JP 2007320979
(71) Applicant: NTT DoCoMo, Inc., Chiyoda-ku Tokyo 100-6150 (JP)
(72) Inventor: SAWAHASHI, Mamoru, Tokyo 100-6150 (JP); HIGUCHI, Kenichi, Tokyo 100-6150 (JP); MIKI, Nobuhiko, Tokyo 100-6150 (JP); TANNO, Motohiro, Tokyo 100-6150 (JP)
(74) Representative: HOFFMANN EITLE
(86) International application number: PCT/JP2008/072420
(87) International publication number: WO 2009/075296

(57) **Abstract**

In a mobile communication system, a downlink MBMS channel is transmitted from a plurality of cells in timing synchronized with each other. The system includes: a unit configured to collectively transit a notification of setting up an uplink line for responding to the downlink MBMS channel to a plurality of user apparatuses specified by an upper node of the base station apparatus; a unit configured to set up the uplink line for a user apparatus that responds to the notification; and a unit configured to transfer a signal received from each user apparatus via the uplink line to the upper node.

## Description

### TECHNICAL FIELD

The present invention generally relates to a technical field of mobile communications. More particularly, the present invention relates to communications by MBMS (Multimedia Broadcast Multicast Service).

### BACKGROUND ART

In mobile communication systems in recent years, communications are performed not only based on unicast channels, but also based on broadcast channels, especially, based on the multimedia broadcast multicast service (MBMS). A downlink MBMS channel is transmitted from a plurality of cells with timing synchronized with each other conveying the same information. The user apparatus performs soft combining on the downlink MBMS channel from each cell so that the reception quality can be maintained to be high. Especially, regarding the downlink MBMS channel, in a case where the same scramble code is used in the plurality of cells and where the same downlink MBMS channel is transmitted from the plurality of cells in synchronization with each other, signals from each cell received by the user apparatus can be processed as if the signals were multipath components transmitted from one base station. The technique is called SFN (Single Frequency Network) or MBSFN (Multicast Broadcast SUN).

Further, the user can not only receive the downlink MBMS channel, but also the user can indicate some sort of intention (response, vote, reaction, and the like). Such a service is called interactive MBMS (for example, refer to non-patent document 1 at the time when the present application was filed).
[non-patent document 1] <URL: http://www.qualcomm. com/mediaflo/products/interactivity.shtml>

### DISCLOSURE OF THE INVENTION

### PROBLEM TO BE SOLVED BY THE INVENTION

In the interactive MBMS, it is necessary to set up an uplink line (or an uplink connection) for each user in order to indicate an intention by each user. It can be considered that the set-up of the uplink line can be performed in a manner similar to that for the unicast channel. Since the unicast channel presupposes that signals different for each user are transmitted at different timings, a set-up procedure for the uplink line is processed for each individual user. However, in the case of MBMS (MBSFN), since a plurality of users receive the same signal at the same time, it may not be efficient to use the procedure for the unicast channel as it is.

By the way, in the unicast channel, a equally wide band is prepared for each of uplink and downlink, so that the system is designed such that, even though equally large amount of traffic occurs in each of the uplink and the downlink, each traffic can be sufficiently accommodated. The schemes for transmission from each cell are different between the unicast channel and the MBMS channel, it can be considered to transmit the channels using a time division multiplexing (TOM) scheme. For example, the downlink MBMS channel is transmitted using subframes appearing at predetermined intervals, and the unicast channel is transmitted in other subframes. As for MBMS, it is predicted that traffic amounts for the uplink and downlink become asymmetrical (that is, traffic amount in the downlink channel becomes by far greater than uplink channel). In this case, although the band for the downlink channel may be sufficiently utilized in subframes for the MBMS channel, there is a fear that the utilization ratio for the band of the uplink channel becomes substantially low.

An object of the present invention is to improve efficiency of the procedure for setting up the uplink line for responding to the downlink MBMS channel in a mobile communication system in which interactive MBMS is performed.

Another object of the present invention is to improve band utilization efficiency of the uplink line for responding to the downlink MBMS channel in a mobile communication system in which interactive MBMS is performed.

### MEANS FOR SOLVING THE PROBLEM

According to a mobile communication system of an embodiment of the present invention, a downlink MBMS channel is transmitted from a plurality of cells in timing synchronized with each other. The mobile communication system includes:
a unit configured to collectively transit a notification of setting up an uplink line for responding to the downlink MBMS channel to a plurality of user apparatuses specified by an upper node of the base station apparatus;
a unit configured to set up the uplink line for a user apparatus that responds to the notification; and
a unit configured to transfer a signal received from each user apparatus via the uplink line to the upper node.

### EFFECT OF THE INVENTION

According to the present invention, efficiency of the procedure for setting up the uplink line for responding to the downlink MBMS channel can be improved in a mobile communication system in which interactive MBMS is performed.

### BRIEF DESCRIPTION OF THE DRAWINGS

Fig. 1 is a diagram showing a mobile communication system;
Fig. 2 is a diagram showing a conventional operation example;
Fig. 3 is a diagram showing an operation example according to an embodiment;
Fig. 4 is a diagram showing a channel coding unit;
Fig 5 is a diagram showing another operation example according to an embodiment;
Fig. 6 is a diagram showing a manner in which control information is prepared as dedicated information;
Fig. 7 is a diagram showing a manner in which control information includes dedicated information and common information;
Fig. 8 is a diagram showing a manner in which a specific band is prepared for the downlink MBMS channel;
Fig. 9 is a diagram showing a base station apparatus (eNB); and
Fig. 10 is a diagram showing a user apparatus (UE).

### DESCRIPTION OF REFERENCE SIGNS

- 100: UE, user apparatus
- 102: sending and receiving antenna
- 104: amplifying unit
- 106: sending and receiving unit
- 108: baseband processing unit
- 112: application unit
- 200: eNB, base station apparatus
- 202: sending and receiving antenna
- 204: amplifying unit
- 206: sending and receiving unit
- 208: baseband signal processing unit
- 210: call processing unit
- 212: transmission line interface

### PREFERRED EMBODIMENTS FOR CARRYING OUT THE INVENTION

According to an embodiment of the present invention, a base station apparatus for use in a mobile communication system in which a downlink MBMS channel is transmitted from a plurality of cells in timing synchronized with each other is used. The base station apparatus includes: a unit configured to collectively transit a notification of setting up an uplink line for responding to the downlink MBMS channel to a plurality of user apparatuses specified by an upper node of the base station apparatus; a unit configured to set up the uplink line for a user apparatus that responds to the notification; and a unit configured to transfer a signal received from each user apparatus via the uplink line to the upper node.

The notification may include common control information common to a plurality of user apparatuses, and dedicated control information that is prepared for each individual user apparatus, and information including the common control information and dedicated control information of a plurality of user apparatuses may form one unit of channel coding.

According to an embodiment of the present invention, a mobile communication system in which a downlink MBMS channel is transmitted from a plurality of cells in timing synchronized with each other is used. The mobile communication system includes: a unit configured to receive, from a user apparatus, a request for setting up an uplink line for responding to the downlink MBMS channel; a unit configured to set up the uplink line for the user apparatus; and a unit configured to transfer a signal received from each user apparatus via the uplink line to an upper node of a base station apparatus. The timing for receiving the request is one of timings that occur in a predetermined cycle that is predetermined in the mobile communication system.

According to an embodiment of the present invention, a user apparatus for use in a mobile communication system in which a downlink MBMS channel is transmitted from a plurality of cells in timing synchronized with each other is used. The user apparatus includes: a unit configured to receive the downlink MBMS channel; a unit configured to transmit, to a base station apparatus, a request signal for requesting set-up of an uplink line for responding to the downlink MBMS channel; and a unit configured to transmit, to the base station apparatus, a response signal for responding to the downlink MBMS channel via the uplink line that is set up in response to the request signal. The timing for transmitting the request signal is one of timings that occur in a predetermined cycle that is predetermined in the mobile communication system.

According to an embodiment of the present invention, a mobile communication system in which a downlink MBMS channel is transmitted from a plurality of cells in timing synchronized with each other is used. The mobile communication system includes: a unit configured to receive, from a user apparatus, a request for setting up an uplink line for responding to the downlink MBMS channel; a unit configured to collectively transmit a notification of setting up the uplink line to a plurality of user apparatuses for which the uplink line is set, and to set up the uplink line; and a unit configured to transfer a signal received from each user apparatus via the uplink line to an upper node of the base station apparatus. The timing for receiving the request is one of timings that occur in a predetermined cycle that is predetermined in the mobile communication system.

According to an embodiment of the present invention, a mobile communication system in which a downlink MBMS channel is transmitted from a plurality of cells in timing synchronized with each other is used. In the mobile communication system, a band for the downlink MBMS channel is prepared separately from a band for an uplink unicast channel and a band for a downlink unicast channel. An uplink line for responding to the downlink MBMS channel is set up by using the band for the uplink unicast channel.

To promote an understanding of the present invention, specific values are used as examples. However, it should be noted that such specific values are just sample values unless otherwise described, and any other values may be used.

### [Embodiment 1]

### <System>

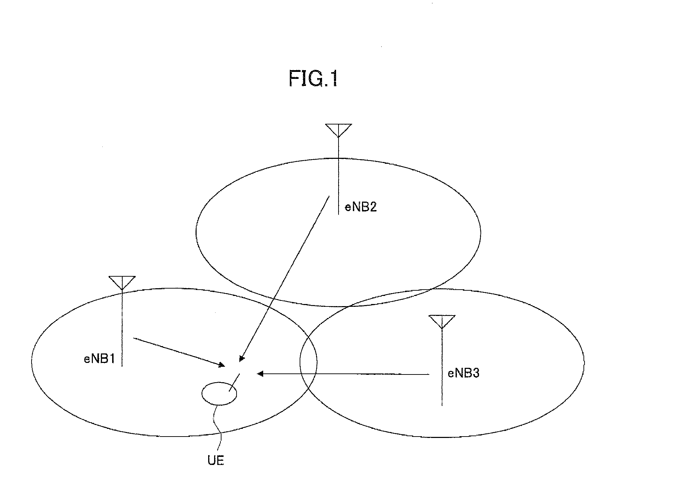

Fig. 1 shows a mobile communication system according to an embodiment of the present invention. The mobile communication system includes a user apparatus UE and base station apparatuses eNB1, eNB2 and eNB3. Each base station apparatus is connected to an upper node which is not shown in the figure (access gateway or MME/UPE or the like, for example). The unicast channel is transmitted using a scramble code that is different for each cell. The downlink MBMS channel is transmitted using the same scramble code in synchronization with each other among the plurality of cells conveying the same information. The user apparatus UE performs soft combining on the downlink MBMS channel received from each cell.

In the present embodiment, although the mobile communication system is a system of LTE (Long Term Evolution) or E-UTRA, the mobile communication system may be based on other systems. The radio access scheme in the downlink in LTE is an OFDM (Orthogonal Frequency Division Multiplexing) scheme. In the uplink, an SC-FDMA (Single-Carrier Frequency Division Multiple Access) scheme is used.

In the LTE system, communication is performed by assigning one or more resource blocks to the user apparatus in either of the downlink and the uplink. The resource blocks are shared by multiple user apparatuses in the system. The base station apparatus determines a user apparatus to be assigned a resource block from among a plurality of user apparatuses for each subframe that is 1 ms in LTE. The subframe may be called a transmission time interval (TTI). Determining the assignment of radio resources is called scheduling. In the downlink, the base station apparatus transmits a shared channel to the user apparatus selected by the scheduling using one or more resource blocks. The shared channel is called a Physical downlink shared channel (PDSCH). In the uplink, the user apparatus selected in the scheduling transmits a shared channel to the base station apparatus using one or more resource blocks. The shared channel is called a physical uplink shared channel (PUSCH).

In the communication system using the above-mentioned shared channels, it is necessary to signal (report) information indicating which user apparatus is assigned the shared channel for each subframe. The control channel used for the signaling is called a physical downlink control channel (PDCCH) or a downlink (DL) - L1/L2 Control Channel. The physical downlink control channel PDCCH includes, for example, Physical Control Format Indicator Channel (PCFICH), Downlink Scheduling Information, Acknowledgement/Non-Acknowledgement information (ACK/NACK), Uplink Scheduling Grant, Overload Indicator, and Transmission Power Control Command Bit, and the like.

PCFICH is information for reporting the format of PDCCH. More particularly, the number of OFDM symbols, of the PDCCH, to be mapped is reported by PCFICH. In LTE, the number of OFDM symbols of the PDCCH to be mapped is 1, 2 or 3, and the symbols are mapped starting from a top OFDM symbol in order in the subframe.

At least the downlink scheduling information corresponds to information to be signaled. For example, the downlink scheduling information includes information on a downlink shared channel, for example. More particularly, the downlink scheduling information includes downlink resource block assignment information, identification information of user apparatus (UE-ID), the number of streams, information on precoding vector, data size, modulation scheme, information on HARQ (Hybrid Automatic Repeat reQuest), and the like.

The uplink scheduling grant includes information on PUSCH, for example. More particularly, the uplink scheduling grant includes uplink resource assignment information, identification information of user apparatus (UE-ID), data size, modulation scheme, uplink transmission power information, information of demodulation reference signal in uplink MIMO, and the like.

In the uplink, user data (normal data signal) and control information associated with it are transmitted by PUSCH. In addition, separate from PUSCH, downlink quality information (CQI: Channel Quality Indicator) and acknowledgement information (ACK/NACK) of PDSCH and the like are transmitted by the physical uplink control channel (PUCCH). CQI is used for scheduling processing and adaptive modulation and coding scheme (AMCS) processing for the physical downlink shared channel. In the uplink, a random access channel (RACH), a signal indicating uplink/downlink radio resource assignment request, and the like are transmitted as necessary.

### <Automatically setting up an uplink line being triggered from the network side>

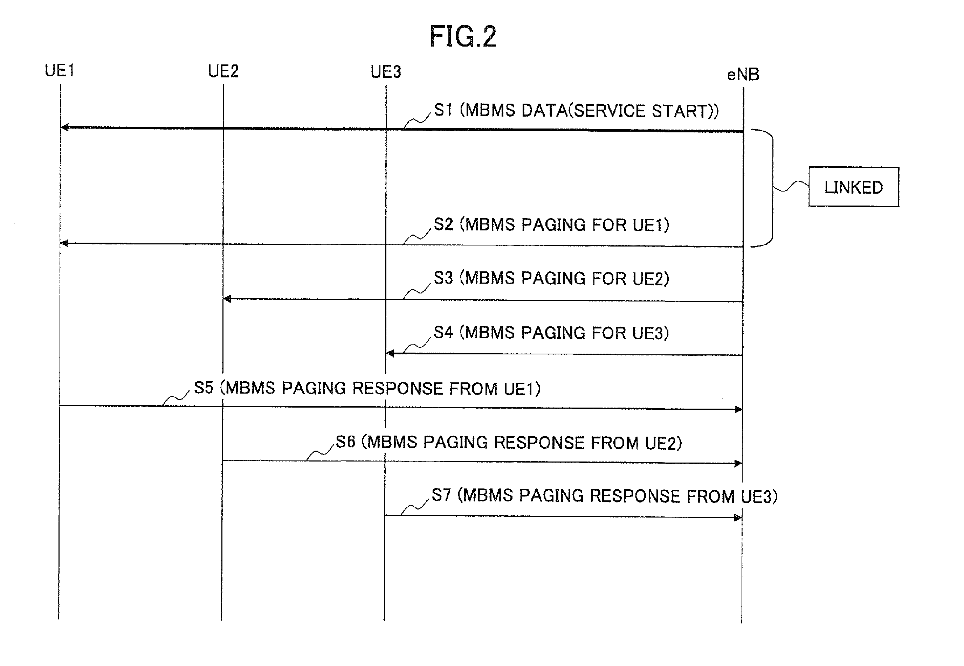

Fig. 2 shows a conventional operation example as a comparison example used for explaining an operation example of an embodiment. In step S1, a MBMS channel starts to be transmitted from the base station apparatus eNB to each of user apparatuses UE1, UE2 and UE3.

In step S2, notification of setting up an uplink line is transmitted to a user apparatus UE1.

In step S3, notification of setting up an uplink line is transmitted to a user apparatus UE2.

In step S4, notification of setting up an uplink line is transmitted to a user apparatus UE3.

In step S5, the user apparatus UE1 responds to the notification received in step S2. Accordingly, a set-up procedure of the uplink line for the user apparatus UE1 starts.

In step S6, the user apparatus UE2 responds to the notification received in step S3. Accordingly, a set-up procedure of the uplink line for the user apparatus UE2 starts.

In step S7, the user apparatus UE3 responds to the notification received in step S4. Accordingly a set-up procedure of the uplink line for the user apparatus UE3 starts.

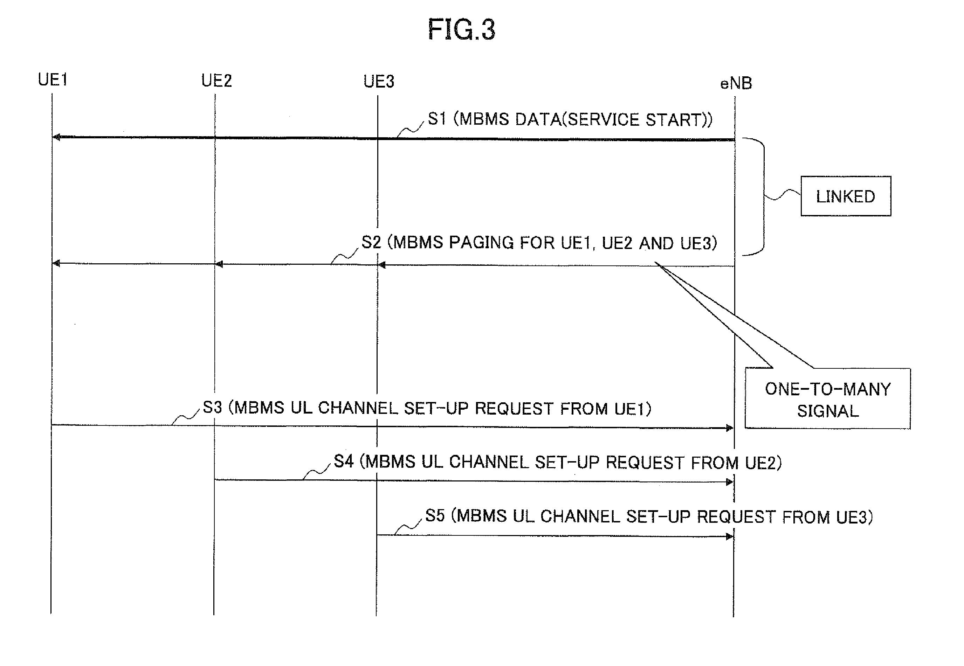

Fig. 3 shows an operation example according to an embodiment of the present invention. Similarly to the case of Fig. 2, a MBMS channel starts to be transmitted from the base station apparatus eNB to each of user apparatuses UE1, UE2 and UE3 in step S1.

In step S2, notification of setting up an uplink like is transmitted to all of the user apparatuses UE1, UE2 and UE3 collectively. This is largely different from the operation shown in Fig. 2 in which the notification is sent for each user apparatus separately. The all user apparatuses in this case mean all of user apparatuses that receive the downlink MBMS channel. More strictly, the all user apparatuses mean all of user apparatuses that receive a downlink MBMS channel, among downlink MBMS channels, that expects a response from a user. Whether a user apparatus corresponds to one of the "all user apparatuses" is managed by a node that is located in an upper side of the base station apparatus, for example.

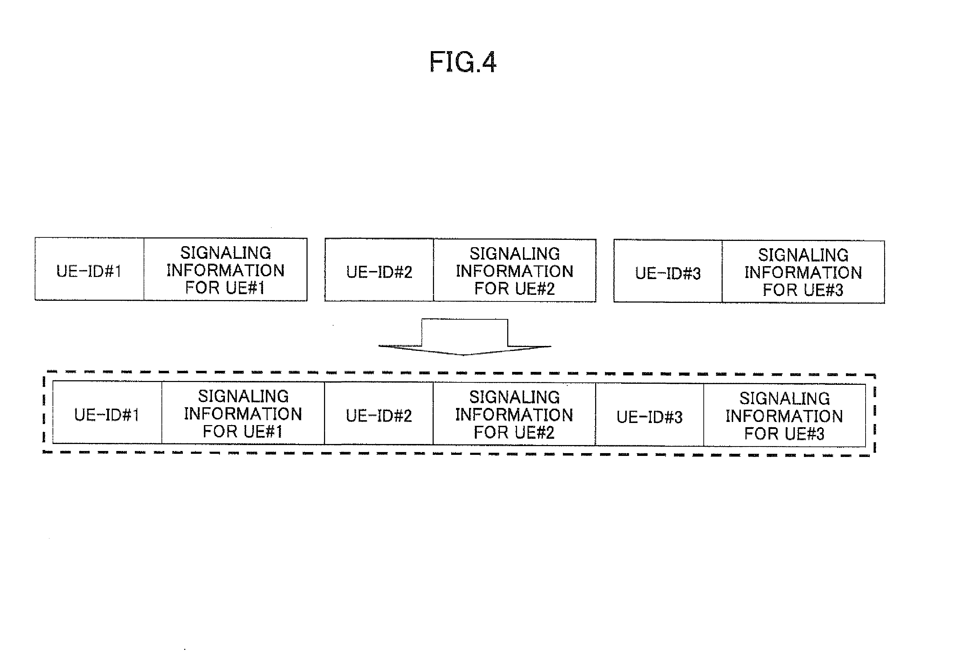

"Transmitting the notification collectively" means that a signal including notification information for UE1, notification information for UE2 and notification information for UE3 form one channel coding unit. As shown in Fig. 4, an information part enclosed in a dashed line box forms the channel coding unit.

In step S3 of Fig. 3, the user apparatus UE1 responds to the notification received in step S2. Accordingly, the procedure for setting up the uplink like for the user apparatus UE1 starts.

In step S4, the user apparatus UE2 responds to the notification received in step S2. Accordingly, the procedure for setting up the uplink like for the user apparatus UE3 starts.

In step S5, the user apparatus UE3 responds to the notification received in step S2. Accordingly, the procedure for setting up the uplink like for the user apparatus UE3 starts.

The responses in steps S3, S4 and S5 may be the same as or different from the responses performed in steps S5, S6 and S7 in Fig. 2. For example, in response to the notification of step S2, the user apparatus UE1 may transmit a signal for requesting set-up of the uplink line. In this case, the notification of step S2 indicates "prompting the user apparatus to request set-up of an uplink line" instead of "notifying the user apparatus that an uplink line is to be set up", so that it is clarified that the user determines whether to send the request. Accordingly, the system can be configured such that a signal indicating a request is always sent from the user side, so that operation procedure can be unified.

### <(b) Setting up an uplink line being triggered from the UE side>

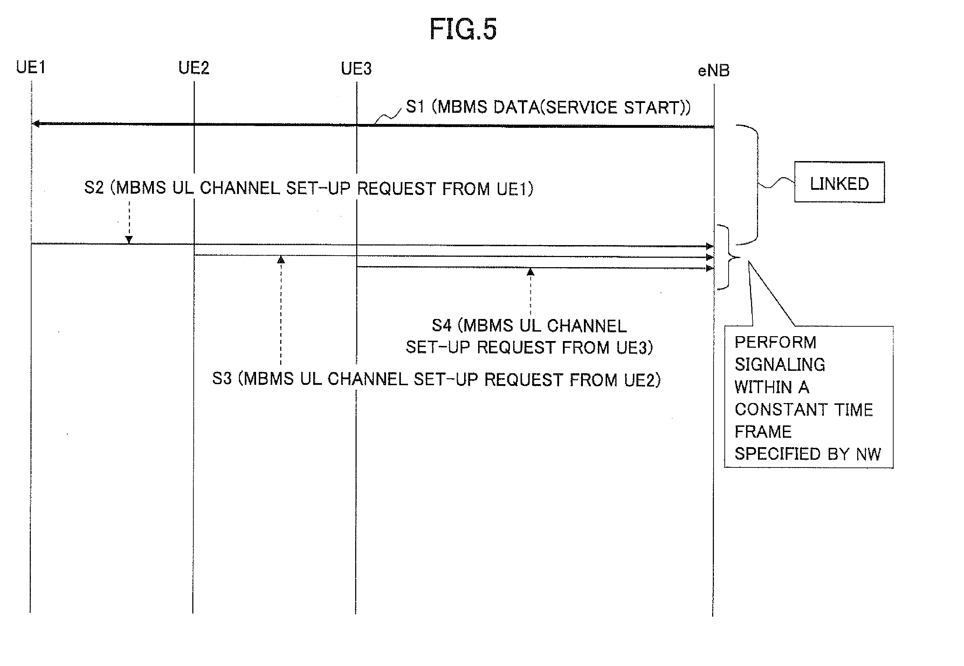

Fig. 5 shows another operation example according to an embodiment of the present invention. In the same way as the cases of Figs. 2 and 3, in step S1 a MBMS channel starts to be transmitted from the base station apparatus eNB to each of user apparatuses UE1, UE2 and UE3.

In step S2, the user apparatus UE1 transmits a signal requesting set-up of an uplink line to the base station apparatus eNB. Accordingly, a procedure for setting up the uplink line for the user apparatus UE1 starts.

In step S3, the user apparatus UE2 transmits a signal requesting set-up of an uplink line to the base station apparatus eNB. Accordingly, a procedure for setting up the uplink line for the user apparatus UE2 starts.

In step S4, the user apparatus UE3 transmits a signal requesting set-up of an uplink line to the base station apparatus eNB. Accordingly, a procedure for setting up the uplink line for the user apparatus UE3 starts.

This method is largely different from the conventional method in that transmission timing from each user apparatus is aligned or reception timing of the base station apparatus is aligned such that the signals sent in steps S2, S3 and S4 are transmitted within a constant time frame. The predetermined time frame may occur in a constant cycle (which is known before start) after the transmission start of the downlink MBMS channel in step S1. Alternatively, information indicating when the time frame occurs may be reported to the user apparatus as necessary. In any way, the base station apparatus receives the signal for requesting set-up of the uplink line within a relatively short period from each user apparatus. Accordingly, the base station apparatus can report, to the upper node, that the base station apparatus has received the signal from each of the user apparatuses collectively. For example, the signal transmitted by the user apparatus in steps S2, S3 and S4 may be random access channel (RACH) if a connection has not been set up. If the connection has already been set up, the signal may be one for requesting scheduling.

### <(c) Combination>

The methods described with reference to Fig. 3 and Fig. 5 may be used individually or may be used by combining them. For example, after the signal prompting set-up of the uplink line is transmitted to the user apparatuses UE1, UE2 and UE3 collectively in step S2 of Fig. 3, the signal requesting the uplink line of steps S3, S4 and S5 in Fig. 3 may be transmitted within a time frame described with reference to Fig. 5.

Or, conversely, after the steps S2, S3 and S4 described with reference to Fig. 5, a response signal (a signal sent in response to the signal requesting set-up of the uplink signal) from the base station apparatus eNB may be transmitted to each user apparatus collectively like step S3 in Fig. 3.

### <Commonality of signaling>

As the control information transmitted from the base station apparatus to the user apparatus, there are dedicated information for each user apparatus and common information common to a plurality of user apparatuses. When the signal prompting set-up of the uplink line is transmitted from the base station apparatus like in the step S2 of Fig. 3, information in the signal may be prepared as either of the dedicated information or the common information. By the way, the control information may be transmitted by a physical channel like PDCCH.

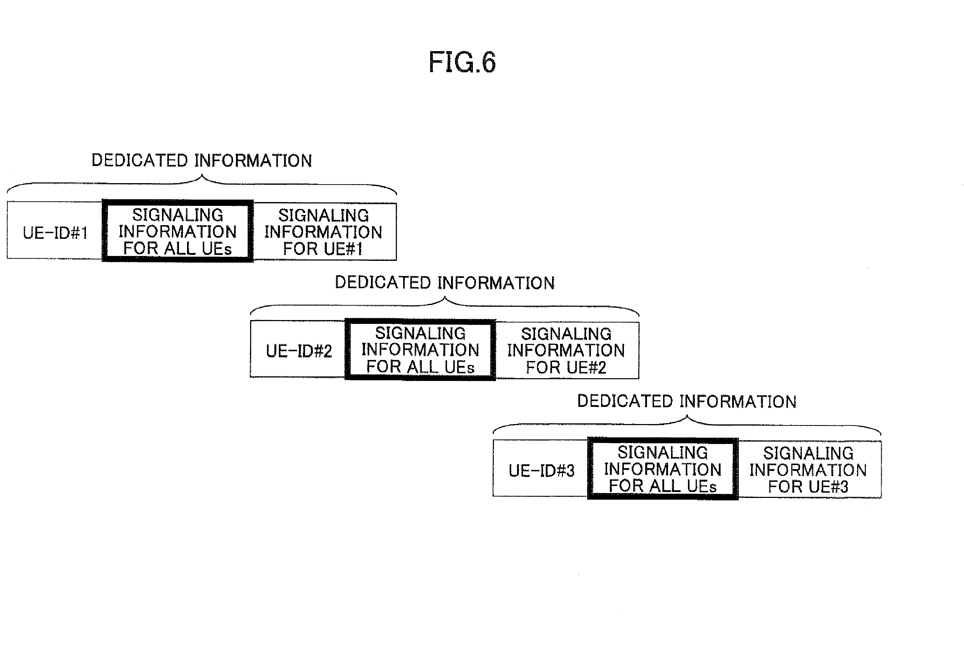

Fig. 6 shows a manner in which the signal (signaling information for all UEs) prompting set-up of the uplink line is prepared as the dedicated information. The dedicated information on the user apparatus UE1 includes UE-ID#1, signaling information for all UEs and signaling information for UE#1. The dedicated information on the user apparatus UE2 includes UE-ID#2, signaling information for all UEs and signaling information for UE#2. The dedicated information on the user apparatus UE3 includes UE-ID#3, signaling information for all UEs and signaling information for UE#3. A signal including these three pieces of dedicated information forms one channel coding unit, and the signal is collectively transmitted to each user apparatus from the base station apparatus. For the sake of convenience of drawing, the channel coding unit in this case is now shown in the figure.

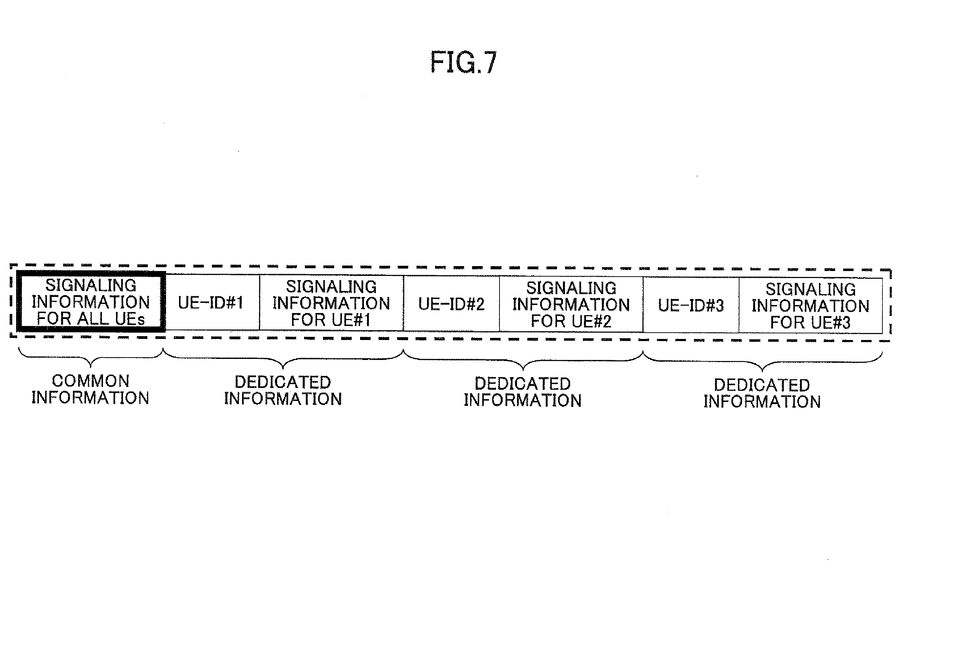

By the way, "signaling information for all UEs" is the same among these three pieces of dedicated information. Therefore, as shown in Fig. 7, it can be considered that the information is prepared as common information. In this case, dedicated information for the user apparatus UE1 includes UE-ID#1 and signaling information for UE#1. Dedicated information for the user apparatus UE2 includes UE-ID#2 and signaling information for UE#2. Dedicated information for the user apparatus UE3 includes UE-ID#3 and signaling information for UE#3. As shown in the dotted line box, these three pieces of dedicated information and the common information are included in one channel coding unit. Each user apparatus needs not only to read dedicated information of the user apparatus but also to read the common information.

### <Preparing band specific for downlink MBMS channel>

As described in the background art, equally wide bands are prepared in the uplink and in the downlink respectively for the unicast channel, so that the system is designed such that, even though equally large amount of traffic occurs in the uplink and the downlink, the traffic can be accommodated in the system.

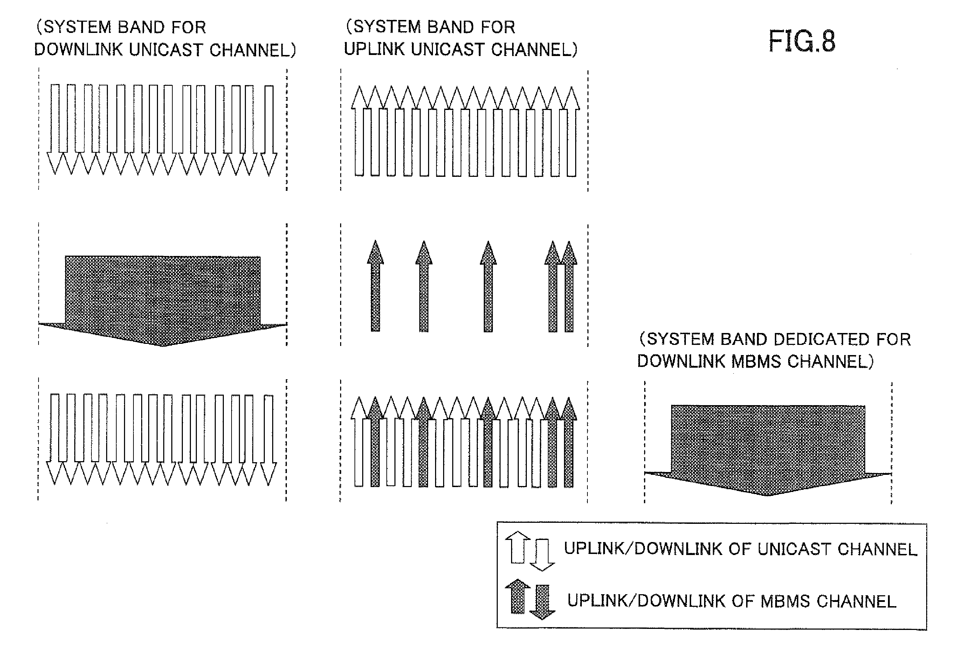

The upper side of Fig. 8 shows a manner in which the equally wide system bands are prepared in the uplink and the downlink.

Since the schemes of transmission from each cell are different between the unicast channel and the MBMS channel, it can be considered to transmit these using the time division multiplexing (TDM) scheme. For example, the MBMS channel may be transmitted using subframes that occur in a predetermined cycle (the center of Fig. 8), and the unicast channel may be transmitted in other subframes (upper side of Fig. 8).

As shown in the center of Fig. 8, as for MBMS, it can be predicted that traffic amounts in uplink/downlink become asymmetric. In such a case, there is a fear that utilization ratio of band for uplink channel becomes substantially low.

As shown in the lower side of Fig. 8, according to an embodiment of the present invention, a band specific for the downlink MBMS channel is prepared separately from the band for unicast channel. A response (the uplink line) for the downlink MBMS channel is transmitted using a band of the uplink unicast channel. For example, the band for the uplink/downlink unicast channel may be prepared in 2 GHz band, and a band specific for the downlink MBMS channel may be prepared in 1.7 GHz band. As to the uplink, a response signal for the downlink MBMS channel in addition to the uplink unicast channel are transmitted using the same band. Thus, it is predicted that congestion may occur. However, in general, since the number of the response signals and the data size are small, they do not largely limit the communication of the existing unicast channel. Although the system communicating the unicast channel is a system of the LTE scheme in the present embodiment, this is not essential for the present invention, and the system communicating the unicast channel may be any proper system for setting up the uplink line. For example, the uplink line for responding to the downlink MBMS channel may be prepared in a system of W-CDMA scheme, or may be prepared as a system of WiMAX. The reason why these schemes can be used is that it is only necessary that intent indication of a user for the downlink MBMS channel reaches the transmission source of the downlink MBMS channel.

### <Base station apparatus (eNB)>

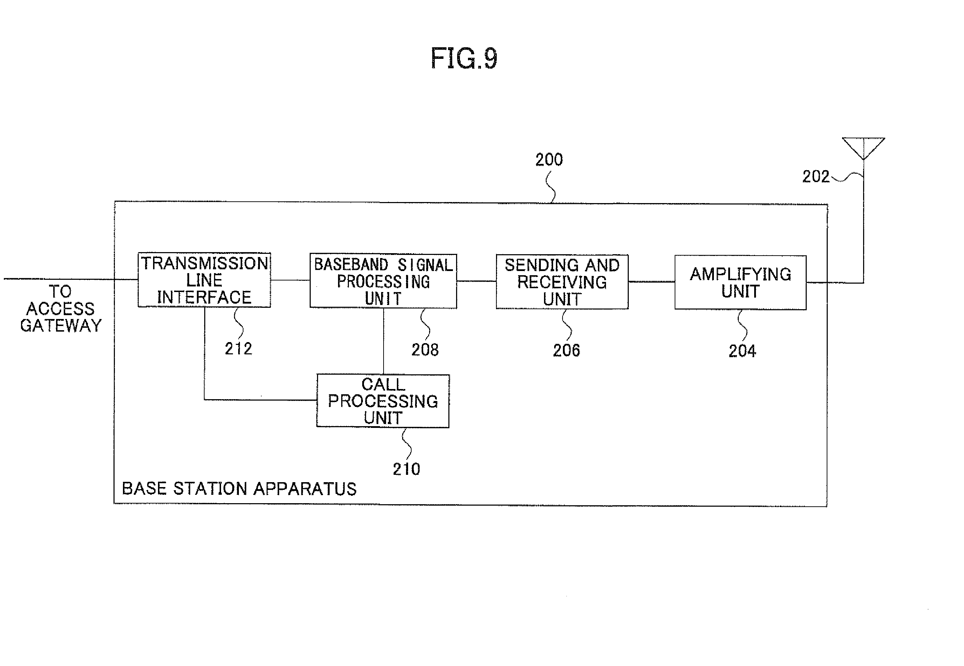

Fig. 9 shows a base station apparatus (eNB) 200 according to an embodiment of the present invention. The base station apparatus includes an antenna 202. The base station apparatus includes an amplifying unit 204. The base station apparatus includes a sending and receiving unit 206.
The base station apparatus includes a baseband processing unit 208. The base station apparatus includes a call processing unit 210. The base station apparatus includes a transmission line interface 212.

Regarding the uplink, the signal of the uplink received by the antenna 202 is properly amplified by the amplifying unit 204, and is supplied to the sending and receiving unit 206. The sending and receiving unit 206 converts the radio frequency signal into a baseband signal. The baseband processing unit 208 performs processing on physical layer, processing on MAC layer, processing on RLC layer and the like.

The processing on the uplink physical layer includes channel decoding processing, discrete Fourier transform (DFT) processing, frequency demapping processing, inverse Fourier transform (IFFT) processing, data modulation processing and the like. The processing on the uplink MAC layer includes MAC layer retransmission control (HARQ) processing for a received signal, scheduling processing for the uplink, PUSCH transmission format selection processing, PUSCH resource block selection processing, and the like. The processing on the uplink RLC layer includes processing for received packets such as packet dividing, packet combining and RLC layer retransmission control and the like.

The call processing unit 210 performs call processing such as communication channel set-up and release, state management of the base station, management of radio resources and the like.

The transmission line interface 212 transmits user data received via the uplink to the upper node.

The baseband processing unit 208 performs reception processing for the signal received within a constant time frame as descried with reference to Fig. 5. Information indicating that such signal is received from each user is reported to the upper node collectively.

On the other hand, as to the downlink, the user data or the downlink MBMS channel received by the transmission line interface 212 is supplied to the baseband processing unit 208. The baseband processing unit 208 performs processing on RLC layer, processing on MAC layer, and processing on physical layer and the like.

The processing on the downlink physical layer includes channel coding processing, data modulation processing, frequency mapping processing, inverse Fourier transform (IFFT) processing, and the like. The processing on the downlink MAC layer includes MAC layer retransmission control processing for a transmission signal, scheduling processing for the downlink, PDSCH transmission format selection processing, PDSCH resource block selection processing, and the like. The processing on the uplink RLC layer includes packet dividing, packet combining and RLC layer retransmission control and the like.

The downlink data is converted to the radio frequency signal by the sending and receiving unit 206, and is amplified by the amplifying unit 204, and is transmitted from the antenna 202.

The signal prompting the user apparatus UE1, UE2 and UE3 to set up the uplink line is generated by the baseband signal processing unit 208. The information transmitted to each user apparatus collectively forms one channel coding unit.

### <User apparatus (UE)>

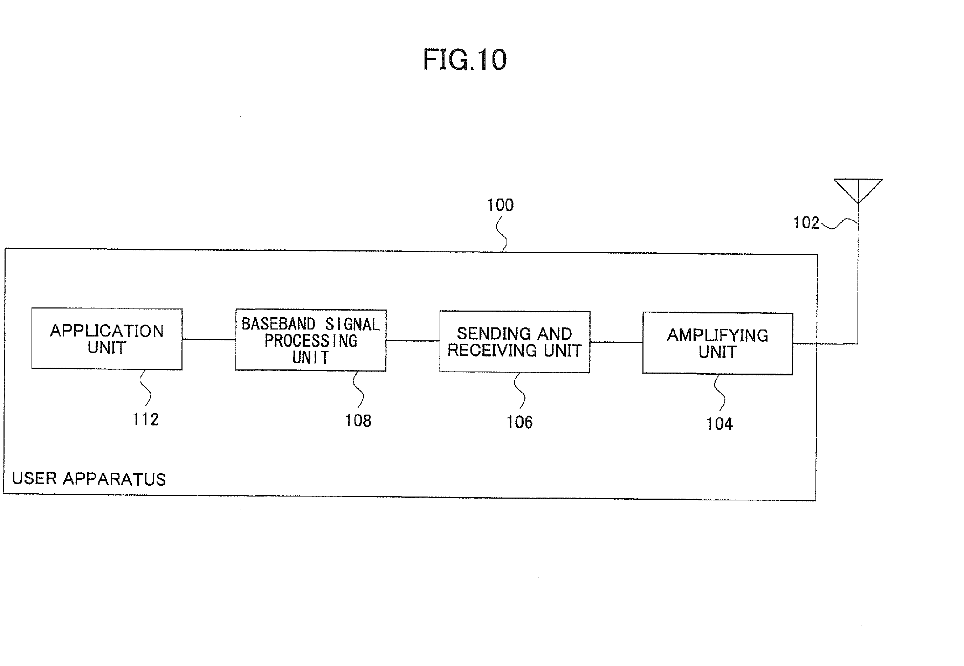

Fig. 10 shows a user apparatus UE according to an embodiment of the present invention. The user apparatus includes an antenna 102. The user apparatus includes an amplifying unit 104.
The user apparatus includes a sending and receiving unit 106. The user apparatus includes a baseband processing unit 108. The user apparatus includes a call processing unit 110. The user apparatus includes an application unit 112.

As to the downlink, an uplink signal received by the antenna 102 is properly amplified by the amplifying unit 104, and is supplied to the sending and receiving unit 106. The sending and receiving unit 106 converts the radio frequency signal into a baseband signal. The baseband processing unit 108 performs processing on physical layer, processing on MAC layer, and processing on RLC layer, and the like.

The processing on the downlink physical layer includes channel decoding processing, fast Fourier transform (FFT) processing, frequency demapping processing, data modulation processing and the like. The processing on the downlink MAC layer includes retransmission control (HARQ) for the received signal in the MAC layer and analysis of downlink scheduling information (identifying PDSCH transmission format, identifying PDSCH resource block, and the like). The processing of the downlink RLC layer includes dividing of received packet, packet combining, retransmission control in RLC layer and the like.

On the other hand, as to the uplink, data occurred in the application unit 112 is provided to the baseband processing unit 108. The baseband processing unit 108 performs processing on RLC layer, processing on MAC layer and processing on physical layer, and the like. After that, the uplink data is converted to the radio frequency signal by the sending and receiving unit 106, amplified by the amplifying unit 104 and is transmitted from the antenna 102.

The processing on the uplink physical layer includes channel coding processing, data modulation processing, discrete Fourier transform (DFT) processing, frequency mapping processing, inverse Fourier transform (IFFT) processing, and the like. The processing on the uplink MAC layer includes MAC retransmission control for the transmission signal, and analysis of uplink scheduling information (identifying PUSCH transmission format, identifying PUSCH resource block, identifying TPC bit and the like). The processing of the uplink RLC layer includes dividing of transmission packet, packet combining, retransmission control in RLC layer and the like.
The present invention is described above by referring to a specific embodiment. However, a person skilled in the art may understand that the above embodiment is described for illustrative purpose only and may think of examples of various modifications, transformations, alterations, changes, and the like. To promote an understanding of the present invention, specific values are used as examples throughout the description. However, it should be noted that such specific values are just sample values unless otherwise described, and any other values may be used. It should be noted that division into several embodiments and items is not essential to the present invention. For example, two or more embodiments or items may be combined on an as-needed basis, and a matter described in an embodiment or an item may be applied to another embodiment or another item (unless contradictory). For illustrative purposes, the apparatus according to an embodiment of the present invention is described with reference to functional block diagrams. However, such an apparatus may be provided by hardware, software, or a combination thereof. The present invention is not limited to the embodiment described above, and various modifications, transformations, alteration, exchanges, and the like may be made without departing from the scope and spirit from the present invention.

The present international application claims priority based on Japanese patent application No. 2007-320979, filed in the JPO on December 12, 2007 and the entire contents of the Japanese patent application No. 2007-320979 are incorporated herein by reference.

## Claims

1. A mobile communication system in which a downlink channel based on a multimedia broadcast multicast service (downlink MBMS channel) is transmitted from a plurality of cells in timing synchronized with each other, comprising:
a unit configured to collectively transit a notification of setting up an uplink line for responding to the downlink MBMS channel to a plurality of user apparatuses specified by an upper node of the base station apparatus;
a unit configured to set up the uplink line for a user apparatus that responds to the notification; and
a unit configured to transfer a signal received from each user apparatus via the uplink line to the upper node.

2. The mobile communication system as claimed in claim 1, wherein the notification includes common control information common to a plurality of user apparatuses, and dedicated control information that is prepared for each individual user apparatus, and wherein information including the common control information and dedicated control information of a plurality of user apparatuses forms one unit of channel coding.

3. A base station apparatus for use in a mobile communication system in which a downlink channel based on a multimedia broadcast multicast service (downlink MBMS channel) is transmitted from a plurality of cells in timing synchronized with each other, the base station apparatus comprising:
a unit configured to collectively transit a notification of setting up an uplink line for responding to the downlink MBMS channel to a plurality of user apparatuses specified by an upper node of the base station apparatus;
a unit configured to set up the uplink line for a user apparatus that responds to the notification; and
a unit configured to transfer a signal received from each user apparatus via the uplink line to the upper node.

4. The base station apparatus as claimed in claim 3, wherein the notification includes common control information common to a plurality of user apparatuses, and dedicated control information that is prepared for each individual user apparatus, and wherein information including the common control information and dedicated control information of a plurality of user apparatuses forms one unit of channel coding.

5. A method for use in a mobile communication system in which a downlink channel based on a multimedia broadcast multicast service (downlink MBMS channel) is transmitted from a plurality of cells in timing synchronized with each other, comprising:
a step in which a base station apparatus collectively transits a notification of setting up an uplink line for responding to the downlink MBMS channel to a plurality of user apparatuses specified by an upper node of the base station apparatus;
a step of setting up the uplink line for a user apparatus that responds to the notification; and
a step of transferring a signal received from each user apparatus via the uplink line to the upper node from the base station apparatus.

6. A mobile communication system in which a downlink channel based on a multimedia broadcast multicast service (downlink MBMS channel) is transmitted from a plurality of cells in timing synchronized with each other, comprising:
a unit configured to receive, from a user apparatus, a request for setting up an uplink line for responding to the downlink MBMS channel;
a unit configured to set up the uplink line for the user apparatus; and
a unit configured to transfer a signal received from each user apparatus via the uplink line to an upper node of a base station apparatus,
wherein timing for receiving the request is one of timings that occur in a predetermined cycle that is predetermined in the mobile communication system.

7. A base station apparatus for use in a mobile communication system in which a downlink channel based on a multimedia broadcast multicast service (downlink MBMS channel) is transmitted from a plurality of cells in timing synchronized with each other, the base station apparatus comprising:
a unit configured to receive, from a user apparatus, a request for setting up an uplink line for responding to the downlink MBMS channel;
a unit configured to set up the uplink line for the user apparatus; and
a unit configured to transfer a signal received from each user apparatus via the uplink line to an upper node of the base station apparatus,
wherein timing for receiving the request is one of timings that occur in a predetermined cycle that is predetermined in the mobile communication system.

8. A user apparatus for use in a mobile communication system in which a downlink channel based on a multimedia broadcast multicast service (downlink MBMS channel) is transmitted from a plurality of cells in timing synchronized with each other, the user apparatus comprising:
a unit configured to receive the downlink MBMS channel;
a unit configured to transmit, to a base station apparatus, a request signal for requesting set-up of an uplink line for responding to the downlink MBMS channel; and
a unit configured to transmit, to the base station apparatus, a response signal for responding to the downlink MBMS channel via the uplink line that is set up in response to the request signal,
wherein timing for transmitting the request signal is one of timings that occur in a predetermined cycle that is predetermined in the mobile communication system.

9. A method for use in a mobile communication system in which a downlink channel based on a multimedia broadcast multicast service (downlink MBMS channel) is transmitted from a plurality of cells in timing synchronized with each other, comprising:
a step of receiving, from a user apparatus, a request for setting up an uplink line for responding to the downlink MBMS channel;
a step of setting up the uplink line for the user apparatus; and
a step of transferring a signal received from each user apparatus via the uplink line to an upper node of a base station apparatus,
wherein timing for receiving the request is one of timings that occur in a predetermined cycle that is predetermined in the mobile communication system.

10. A mobile communication system in which a downlink channel based on a multimedia broadcast multicast service (downlink MBMS channel) is transmitted from a plurality of cells in timing synchronized with each other, comprising:
a unit configured to receive, from a user apparatus, a request for setting up an uplink line for responding to the downlink MBMS channel;
a unit configured to collectively transmit a notification of setting up the uplink line to a plurality of user apparatuses for which the uplink line is set, and to set up the uplink line; and
a unit configured to transfer a signal received from each user apparatus via the uplink line to an upper node of the base station apparatus,
wherein timing for receiving the request is one of timings that occur in a predetermined cycle that is predetermined in the mobile communication system.

11. A mobile communication system in which a downlink channel based on a multimedia broadcast multicast service (downlink MBMS channel) is transmitted from a plurality of cells in timing synchronized with each other,
wherein a band for the downlink MBMS channel is prepared separately from a band for an uplink unicast channel and a band for a downlink unicast channel, and
an uplink line for responding to the downlink MBMS channel is set up by using the band for the uplink unicast channel.
